(19) Europäisches Patentamt
European Patent Office
Office européen des brevets

(11) EP 1 379 338 B1

(12) **FASCICULE DE BREVET EUROPEEN**

(45) Date de publication et mention de la délivrance du brevet:
**17.07.2019 Bulletin 2019/29**

(21) Numéro de dépôt: **02706907.9**

(22) Date de dépôt: **28.02.2002**

(51) Int Cl.:
***B05D 1/18*** *(2006.01)* ***B05D 1/00*** *(2006.01)*
***C09D 5/44*** *(2006.01)*

(86) Numéro de dépôt international:
**PCT/FR2002/000726**

(87) Numéro de publication internationale:
**WO 2002/070148 (12.09.2002 Gazette 2002/37)**

(54) **PROCEDE DE GREFFAGE ORGANIQUE LOCALISE SANS MASQUE SUR DES PORTIONS CONDUCTRICES OU SEMICONDUCTRICES DE SURFACES COMPOSITES**

MASKENLOSES VERFAHREN ZUR LOKALISIERTEN ORGANISCHEN PFROPFUNG AUF LEITFÄHIGEN ODER HALBLEITFÄHIGEN TEILEN VON VERBUNDOBERFLÄCHEN

METHOD FOR MASK-FREE LOCALISED ORGANIC GRAFTING ON CONDUCTIVE OR SEMICONDUCTIVE PORTIONS OF COMPOSITE SURFACES

(84) Etats contractants désignés:
**AT BE CH CY DE DK ES FI FR GB GR IE IT LI LU MC NL PT SE TR**

(30) Priorité: **02.03.2001 FR 0102882**

(43) Date de publication de la demande:
**14.01.2004 Bulletin 2004/03**

(73) Titulaire: **Commissariat à l'Énergie Atomique et aux Énergies Alternatives
75015 Paris (FR)**

(72) Inventeurs:
- **BUREAU, Christophe
F-92150 SURESNES (FR)**
- **PALACIN, Serge
F-78180 MONTIGNY LE BRETONNEUX (FR)**
- **BOURGOIN, Jean-Philippe
F-78960 VOISINS LE BRETONNEUX (FR)**
- **AMEUR, Sami
F-91190 GIF SUR YVETTE (FR)**
- **CHARLIER, Julienne
F-91190 GIF SUR YVETTE (FR)**

(74) Mandataire: **Ahner, Philippe et al
BREVALEX
95, rue d'Amsterdam
75378 Paris Cedex 8 (FR)**

(56) Documents cités:
**EP-A- 0 381 927 EP-A- 0 449 226
EP-A- 0 470 280 FR-A- 2 787 582**

- **PATENT ABSTRACTS OF JAPAN vol. 010, no. 367 (E-462), 9 décembre 1986 (1986-12-09) & JP 61 163659 A (MITSUBISHI ELECTRIC CORP), 24 juillet 1986 (1986-07-24)**
- **PATENT ABSTRACTS OF JAPAN vol. 010, no. 016 (E-375), 22 janvier 1986 (1986-01-22) & JP 60 178669 A (MITSUBISHI DENKI KK), 12 septembre 1985 (1985-09-12)**
- **VIEL P ET AL: "ELECTROPOLYMERIZATION OF METHACRYLONITRILE ON A ROTATING DISK ELECTRODE AT HIGH SPINNING RATE", JOURNAL OF ELECTROANALYTICAL CHEMISTRY AND INTERFACIAL ELECTROCHEMI, ELSEVIER, AMSTERDAM, NL, vol. 470, 1 January 1999 (1999-01-01), pages 14-22, XP008068520, ISSN: 0022-0728, DOI: 10.1016/S0022-0728(99)00202-8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention porte sur un procédé, en particulier un procédé en une seule étape et sans masque, de fonctionnalisation localisée de portions conductrices ou semi-conductrices de surfaces composites par des revêtements organiques ou encore sur un procédé de greffage organique localisé sans masque sur des parties conductrices ou semi-conductrices de surfaces composites.

Il existe aujourd'hui quatre moyens identifiés pour réaliser ce type de greffage organique localisé :

(i) L'adressage sous rayonnement, électronique ou photochimique[1].
(ii) L'électrovaporisation avec masquage[2].
(iii) L'adressage mécanique par micropipetage et robot dispenseur[3].
(iv) L'adressage électrophorétique bidimensionnel[4].
(v) La technique d'impression par microcontact[5].

Le point commun des procédés (i) à (v) est qu'ils sont décomposables en :

- un pavage, dont on souhaite recouvrir certaines zones avec un revêtement organique ;
- un mode de déclenchement de fabrication de liaisons chimiques entre les molécules organiques et la surface. Il s'agit respectivement : (i) d'un faisceau de particules (photos, électrons ou ions) ; (ii) à (v) de réactions de chimisorption ou de physisorption ;
- un procédé de « masquage », responsable de la localisation, qui permet de piloter le fait que le mode de déclenchement agira sur telle zone du pavage et pas telle autre. Il s'agit respectivement : (i) de la focalisation du faisceau ; (ii) d'un masque physique ; (iii) du positionnement mécanique d'une pointe ou d'une buse ; (iv) du protocole bidimensionnel de mise sous potentiel ; (v) de la résolution de la gravure sur le tampon encreur et de la « bavure » des fluides imprimés sur cette gravure.

Dans tous ces procédés, seule la phase de masquage est responsable de la localisation obtenue. En particulier, cette phase est indépendante de la topologie du pavage que l'on souhaite habiller : supposons en effet que ce soit le même pavage que l'on souhaite recouvrir par endroits avec ces différents procédés : à la complexité de la fabrication du pavage se superpose celle du procédé de localisation (ou de « masquage »), qui nécessite le plus souvent un appareillage et une mise au point complexe. Ni le déclencheur de la réaction chimique de fonctionnalisation de surface, ni la localisation offerte par le pavage avant intervention, ne participent à l'efficacité de la localisation : dans le procédé (i) le déclencheur est le faisceau de particules (photons, électrons ou ions), éventuellement piloté par un masque (voir, à ce sujet, le document US-A-3 271 180 (1966)) ; dans le procédé (ii), le déclencheur (non localisé) est une polarisation du substrat sur lequel viennent réagir des molécules spatialement filtrées par un masque : le masque assure la localisation ; dans le procédé (iii), le déclenchement est à nouveau une polarisation du substrat, et la localisation vient de ce qu'on vient déposer les molécules par micropipetage au fond d'une petite cuvette gravée dans le substrat, et rendue conductrice par dépôt d'or ; dans le procédé (iv), les molécules sont guidées par électrophorèse dans un gel à la zone voulue, puis fixées par réaction chimique dans le gel (à l'aide d'un réactif qui constitue le déclencheur).

Dans tous ces procédés, la résolution spatiale du greffage est donc celle du procédé de « masquage » : elle n'exploite pas au mieux le guide géométrique déjà offert par le pavage.

Un point commun supplémentaire des procédés (ii) à (v) est que la localisation du matériau organique y repose sur un déplacement physique des molécules à greffer, de façon aussi pilotée que possible. La résolution intrinsèque du procédé est alors reliée à la maîtrise du mode de déplacement des molécules : résolution du masque pour (ii), résolution latérale des déplacements mécaniques de microbuses pour (iii), protocole de mise sous potentiel pour contrecarrer les effets de diffusion locale et d'élargissement des spots dans (iv), etc.

La demande de brevet, publiée EP-A1-0 774 662 (1996), décrit la réalisation d'une topologie d'adressage de plots individuels conducteurs sur une surface de semi-conducteur, qui n'est pas l'objet de la présente invention, puisque l'on suppose que le pavage existe, et que c'est précisément sur ce pavage que l'on réalise des fonctionnalisations. Elle mentionne son utilisation possible pour la réalisation locale de réactions électrochimiques. Il s'agit, comme pour le procédé (i), d'un moyen d'obtenir localement un déclencheur de réactions, électrochimiques cette fois, par polarisation sélective d'une zone du pavage, mais la complexité du mode de localisation et du déclencheur se ramènent à celle de la réalisation du pavage : c'est le pavage lui-même qui est censé assurer la localisation. Cette demande de brevet ne fait toutefois pas mention de réactions électrochimiques spécifiques, ni de fonctionnalisations localisées. C'est donc également un procédé où l'on peut obtenir la localisation du fait de la sélection de la zone polarisée, par multiplexage, l'ensemble du support, comportant toutes les zones contactables, étant trempé dans le bain électrochimique. Dans les brevets associés au procédé (iii)[3], il est mentionné toutefois que cette méthode d'adressage individuel avec multiplexage est un frein à l'application sur des gravures denses, du fait de la complexité et du surcoût du multiplexage.

La résolution latérale actuelle des dépôts organiques obtenue par les procédés (i)-(iv) est de l'ordre de quelques dizaines à la centaine de microns. Cette barrière se retrouve partout, pour des raisons diverses : focalisation et stabilité chimique dans la zone de greffage pour (i), précision des effets du masquage pour (ii), maîtrise des déplacements mécaniques des buses à haute résolution et grande échelle pour (iii), diffusion et élargissement des plots dans le gel, au cours de la migration pour (iv). Le procédé d'adressage localisé par multiplexage ne semble a priori borné que par la résolution actuelle de la microélectronique (soit quelques dixièmes de micromètres), mais aucun procédé de fonctionnalisation associé à cet adressage n'est décrit, à notre connaissance. La technique d'empreinte par microcontact[5] (v) a une résolution de l'ordre de 100 nm sur une surface plane. Elle n'est pas décrite sur une surface structurée par un pavage.

Les informations sur la stabilité du greffage délivrant la fonctionnalisation primaire obtenue par les procédés (i)-(iv) ne sont pas toutes disponibles. On pourra remarquer cependant que le procédé (iii), qui utilise la croissance de polymères conducteurs, ne permet pas un greffage solide sur la surface. Comme il est rappelé ci-après, l'électropolymérisation de monomères précurseurs de polymères conducteurs est un mécanisme où la croissance du polymère a lieu en solution, et est suivie d'une précipitation du polymère sur la surface : cette précipitation n'engendre pas, en général, de liaisons chimiques d'interface, et délivre une fonctionnalisation sur la surface, mais pas une fonctionnalisation de la surface. Le procédé décrit dans la référence du point (v) (WO-A-96 29629) met en jeu une liaison covalente Au-S, mais qui n'est pas obtenue sur un pavage pré-existant, et qui s'avère moins résistante que les liaisons fabriquées par le présent procédé.

La demande de brevet EP-A-0 449 226 décrit un procédé pour fabriquer un élément de connexion à résistance non linéaire ayant une structure conducteur/isolant/conducteur, l'isolant étant constitué d'un film de polymère électrolytique organique formé sur l'ensemble de la surface du motif conducteur par un procédé d'électropolymérisation effectuée à un potentiel constant.

L'article de Viel et al., 1999 (Journal of Electroanalytical Chemistry, vol. 470, pages 14-22) décrit notamment une électrode à disque rotatif en platine sur toute la surface de laquelle est greffé par électrogreffage du polyméthacrylonitrile.

En résumé, les procédés de l'art antérieur présentent les inconvénients suivants :

- la phase de masquage classiquement utilisée pour effectuer un greffage organique sur une surface minérale étant responsable de la localisation obtenue, la résolution spatiale du greffage est celle du procédé de masquage. Elle est donc au mieux de l'ordre des résolutions actuelles de la microélectronique. Par ailleurs, la localisation du matériau organique repose sur un déplacement physique des molécules à greffer, de façon aussi pilotée que possible. La résolution intrinsèque du procédé est donc également reliée à la maîtrise du monde de déplacement des molécules ;
- plusieurs étapes de mise en oeuvre sont nécessaires : la plupart les méthodes connues qui poursuivent le même objectif procèdent par masquage ; par déplacement physique préalable, géographiquement sélectif, de molécules, ou d'activation physico-chimique intrinsèquement localisée, mais indépendante de la résolution du pavage, puis enfin d'un greffage ;
- les liaisons métal-molécules fabriquées s'avèrent peu résistantes.

La présente invention a pour but de fournir un procédé qui permette d'obtenir une fonctionnalisation localisée, par exemple, sur un pavage pré-existant, en surmontant et en résolvant les problèmes posés par les procédés de l'art antérieur, notamment en ce qui concerne la résolution de la phase de masquage, et la solidité de la fixation du revêtement.

Ce but et d'autres encore sont atteints, conformément à l'invention par un procédé de greffage localisé sans masque de molécules organiques susceptibles d'être électriquement activées, sur une surface composite comprenant des portions conductrices et/ou semi-conductrices, par mise en contact desdites molécules organiques avec ladite surface composite, dans lequel ledit greffage est réalisé électrochimiquement en une seule étape sur des zones choisies, définies, desdites portions conductrices et/ou semi-conductrices, lesdites zones étant portées à un potentiel supérieur ou égal à un potentiel électrique seuil déterminé par rapport à une électrode de référence, ledit potentiel électrique seuil étant le potentiel au-delà duquel se produit le greffage desdites molécules organiques.

De préférence, la surface composite est constituée d'un pavage de matériaux de matières différentes.

Avantageusement, lesdites molécules organiques sont choisies parmi les molécules électropolymérisables et les molécules électroclivables.

Avantageusement, lesdites molécules électroclivables sont choisies parmi les sels de diazonium, les sels de phosphonium, les sels de sulfonium, les sels d'acide carboxylique, les acétates d'aryle, les alcools aliphatiques et les amines.

De préférence, lesdites molécules électropolymérisables sont choisies parmi les monomères vinyliques de formule B-R-A, où R est un groupement portant une double liaison vinylique, A est un groupement fonctionnel électroattracteur ou électrodonneur, et B est un groupement fonctionnel quelconque, par exemple portant une fonction que l'on désire conférer au polymère final obtenu à partir desdits monomères ; les molécules comprenant au moins un cycle

tendu ; les monomères fonctionnalisés dérivés desdits monomères et molécules ; et les mélanges desdits monomères et molécules.

Avantageusement, ladite surface composite est une surface de silicium et d'or ou de dioxyde de silicium et d'or.

La présente invention permet d'obtenir une fonctionnalisation localisée, par exemple sur un pavage de matériaux de natures différentes pré-existant, en surmontant et en résolvant les problèmes posés par les techniques de l'art antérieur, en particulier, par exemple :

- le procédé de l'invention permet une localisation du revêtement avec une résolution dictée par tout ou partie du motif du pavage d'origine (la sélectivité est réalisée principalement par un ajustement du potentiel électrique - mesuré par rapport à une électrode de référence - appliqué à la zone choisie). La résolution obtenue est négligeable par rapport à celle de la microélectronique ;
- le procédé est réalisé en une seule étape. La régiosélectivité de la fixation est obtenue par la réaction de greffage elle-même. Le coût de mise en oeuvre du procédé est donc moindre ;
- la solidité de la fixation du revêtement est inégalée.

Selon l'invention, en effet, la fonctionnalisation est obtenue par électrogreffage de molécules électroactivables, susceptibles de délivrer une couche de molécules ou de macromolécules, greffées sur la surface par l'intermédiaire de liaisons chimiques d'interface.

Peuvent être candidates, par exemple, les molécules électroclivables (comme les sels de diazonium, de phosphonium ou de sulfonium, les arylacétates, les alcools aliphatiques, les amines), ou les monomères délivrant des polymères intrinsèquement isolants (mais pouvant devenir conducteur par post-traitement), comme par exemple des monomères vinyliques ou des molécules à cycle tendu.

Selon l'invention, lorsqu'une surface macroscopique est constituée d'un pavage de matériaux de natures différentes, on parvient ainsi à réaliser le greffage sur certaines zones choisies du pavage, à l'exclusion des autres, alors même que l'on a trempé la totalité de la surface macroscopique dans la solution d'électrolyse.

La sélectivité est réalisée principalement par un ajustement du potentiel électrique - mesuré par rapport à une électrode de référence - appliqué à la zone choisie ; pour cette raison, la sélectivité est obtenue quelle que soit la zone du pavage où le contact électrique a été physiquement installé. Par matériaux « de natures différentes », on entend ainsi des matériaux qui diffèrent par, par exemple, au moins l'un des paramètres suivants : travail de sortie électronique dans le vide, solvatation de la surface par le solvant d'électrolyse, acidité de Brönsted dans le solvant d'électrolyse.

Ce greffage localisé en une seule étape représente une innovation significative pour la fonctionnalisation sélective de surfaces composites.

Tout d'abord, comme il est décrit ci-après, la régiosélectivité de la fixation est obtenue par la réaction de greffage elle-même. La résolution est celle du pavage pré-existant, et ne nécessite l'intervention d'aucune méthode de dépôt ni de déplacement moléculaire localisé. C'est pourquoi elle autorise un trempage massif indifférencié de la surface à traiter, alors que la plupart les méthodes connues qui poursuivent le même objectif procèdent par déplacement physique préalable, géographiquement sélectif, de molécules, ou d'activation physico-chimique intrinsèquement localisée mais indépendante de la résolution du pavage, avant de leur appliquer un greffage qui - en lui-même - n'est pas régiosélectif. Cette distinction, importante du point de vue du fonctionnement mais aussi des capacités de résolution du procédé, nous amènera à décrire la présente invention comme celle d'un greffage localisé « en une seule étape ».

Ensuite, le greffage n'a lieu massivement qu'au-delà d'un potentiel électrique seuil, par rapport à une électrode de référence. Ainsi, il aura lieu sur toute zone conductrice ou semi-conductrice portée à ce potentiel, quelle que soit la méthode par laquelle ce potentiel est obtenu. Sur une surface composée d'un pavage à motif répétitif où l'on souhaite ne greffer que sur une sous-partie du motif mais sur toute l'étendue du pavage, le greffage est réalisable en une seule étape sur toutes ces sous-parties en même temps pour peu qu'elles soient au potentiel voulu (ce qui par exemple le cas si elles sont tout simplement connectées entre elles). Ce cas se présente, par exemple, lorsque l'on réalise des dispositifs de microélectronique gravés sur un seul grand wafer de silicium.

Enfin, lorsque l'on souhaite greffer sur toutes les zones conductrices d'une surface semi-conductrice, il peut être inutile de connecter les zones conductrices entre elles : une mise sous potentiel adéquate de la surface semi-conductrice qui sert de support peut suffire pour réaliser le greffage sur toutes les zones conductrices, et uniquement sur elles.

La présente invention peut trouver une utilisation avantageuse pour la fonctionnalisation sélective des surfaces comme celles des circuits de microélectronique (quelle que soit leur application : bio-puces, microcapteurs, « lab-on-chips », mémoires, etc.), des dispositifs de microfluidique, des pièces de micromécanique ou d'orfèvrerie fine, et plus généralement tous les matériaux ayant des surfaces composites dont au moins certaines portions sont en matériau conducteur et/ou semi-conducteur.

Le revêtement organique greffé est tout d'abord utilisable pour lui-même, par exemple pour les fonctions de : isolation localisée, conduction localisée, biocompatibilisation localisée, collage localisé, nivellement précis sur des zones

de pavage distantes, etc..

Il est également utilisable en tant que primaire de fixation d'autres substances organiques : il constitue, par exemple, un candidat idéal pour la réalisation de supports de base pour des plots organiques très localisés, comme ceux utilisés dans la fabrication des biopuces ou puces à ADN, des puces à protéines, des capteurs, des mimes de surfaces biologiques microstructurées autonettoyantes, etc.

En cela, le greffage localisé de molécules, de polymères ou de co-polymères intrinsèquement isolants est en fait celui de « velcro moléculaires » génériques localisés : il ouvre la voie vers un greffage localisé de tout type de molécule organique, polymérisable ou non, notamment par fonctionnalisation ultérieure (par exemple, par fonctionnalisation chimique ou électrochimique) du film organique greffé. Cet aspect constitue un élément important de la présente demande.

L'invention ici décrite porte donc notamment :

- Sur un procédé, en une seule étape, de fonctionnalisation localisée de portions choisies, conductrices ou semi-conductrices, de surfaces composites constituées, par exemple d'un pavage de motifs, par des revêtements organiques. Ce procédé est notamment caractérisé en ce qu'une portion est déclarée choisie lorsqu'elle est à un potentiel électrique supérieur à un potentiel seuil par rapport à une électrode de référence : la fonctionnalisation sur cette portion intervient alors sans qu'il ait été nécessaire de limiter physiquement l'approvisionnement en molécules servant à la fonctionnalisation à la seule surface de cette portion. En d'autres termes, la fonctionnalisation n'intervient que sur la (les) portion(s) choisie(s) alors que la surface composite est entièrement baignée dans le milieu contenant les précurseurs de la fonctionnalisation.
- Sur l'utilisation du greffage par électropolymérisation de monomères vinyliques ou de monomères à cycle tendu pour réaliser le greffage localisé comme décrit ci-dessus.
- Sur l'utilisation du greffage de molécules électroclivables pour réaliser le greffage localisé comme décrit ci-dessus.
- Sur la structure moléculaire des monomères utilisables pour réaliser un greffage localisé par électropolymérisation, précisant notamment que le terme d'électropolymérisation recouvre à la fois les polymérisations (monomère pur) et les copolymérisations (mélanges de monomères) électrochimiquement initiées.
- Sur la structure moléculaire des molécules électroclivables utilisables pour réaliser un greffage localisé par électrogreffage par clivage.
- Sur la possibilité d'utiliser ces revêtements organiques greffés pour les fonctions de : conduction électrique et/ou thermique localisée, isolation localisée, biocompatibilisation localisée, collage localisé, nivellement précis sur des zones de pavage distantes, etc..
- Sur la possibilité d'utiliser ces revêtements organiques greffés comme primaires de fixation pour tout type de molécule organique, par fonctionnalisation chimique ou électrochimique du revêtement greffé, choisi de façon adéquate en fonction de la molécule à y fixer.
- Sur la possibilité d'utiliser le greffage localisé comme masque moléculaire localisé, dégreffable a posteriori, de façon à pouvoir réaliser le greffage d'autres composés organiques sur d'autres zones, et notamment des zones sur lesquelles on ne peut pas réaliser de greffage par électropolymérisation (par exemple des zones isolantes).
- Sur des exemples d'application démontrant le greffage sélectif sur or, sur des surfaces composites Au/Si et Au/$SiO_2$.

Le greffage localisé, à l'échelle micronique ou submicronique, de substances organiques sur des surfaces minérales présente un intérêt pour différents domaines. On pourra citer par exemple ceux reliés à la microélectronique, à ses techniques et à ses applications (nouvelles générations de têtes d'imprimante à jet d'encre, capteurs électroniques utilisables in vivo - en interventionnel ou en implantable, biopuces, microfluidique, lab-on-chips, etc.), ceux reliés à la réalisation de surfaces associant micro- ou nano-structuration et nature chimique des dépôts (surfaces autonettoyantes, antibuées, etc.).

Dans ces domaines, l'enjeu est de pouvoir fonctionnaliser une zone bien précise d'une surface avec des groupements fonctionnels organiques bien précis, de façon à conférer à cette portion de la surface des propriétés tout à fait spécifiques. L'intérêt est ensuite de pouvoir juxtaposer de telles zones fonctionnalisées ayant des propriétés - et donc des groupements fonctionnels - différents, de façon à pouvoir créer une fonction, chimique (capture, transduction, biocompatibilisation, collage, etc.) ou physique (électrique, etc.) sur la surface ou sur une partie de la surface.

L'invention se rapporte notamment à une fonctionnalisation sélective de pavages conducteurs ou semi-conducteurs, sur la surface, qui ont pu être obtenus par d'autres moyens ne concernant pas l'invention. Dans le domaine de la microélectronique par exemple, il peut s'agir de plots ou de pistes d'or sur un wafer de silicium, obtenus par exemple par les techniques traditionnelles de photo- ou d'électrolithographie. La résolution globale de la fonctionnalisation organique localisée, telle qu'elle est réalisée dans la présente invention, concerne donc la manière dont la résolution du pavage conducteur ou semi-conducteur initial est préservée ou dégradée par le greffage localisé présenté ici. En d'autres termes, l'efficacité de la localisation du greffage de la présente invention s'évalue moins sur la taille limite de chaque pavage que sur la façon dont les frontières qu'il délimite avant intervention sont préservées par le présent procédé de

fonctionnalisation.

L'intérêt de réaliser une fonctionnalisation organique localisée sur certaines zones d'un pavage de surface tient à ce que l'on peut conférer localement à la surface un certain nombre de propriétés, propre au revêtement organique déposé. En particulier, on peut conférer à une zone du pavage une réactivité chimique spécifique qui permettra de localiser des réactions chimiques ultérieures (par exemple pour une seconde fonctionnalisation) en utilisant des voies de synthèse organique traditionnelles.

Cet aspect prend toute sa saveur lorsque le pavage initial, avant intervention par le présent procédé, est constitué de composés minéraux, et en particulier de différents conducteurs. En effet, les composés organiques sont des matériaux présentant des états de surface localisés : en termes chimiques, on dit qu'ils possèdent des groupements fonctionnels. En ce sens, faire de la chimie sur une surface organique est « simple », dans la mesure où il s'agit de faire réagir des groupements fonctionnels avec d'autres, donc de tirer parti de l'expérience acquise ces 100 dernières années en chimie organique. La situation est tout autre pour les surfaces de conducteurs. La surface des métaux est faite d'états électroniques délocalisés (à part les défauts de surface) : en termes chimiques, la notion même de groupement fonctionnel disparaît, et on ne peut plus traiter la chimie de surface des métaux ou des semi-conducteurs à la lumière de l'expérience acquise en chimie organique.

Le présent procédé permet, en particulier, de résoudre le problème d'interfaçage minéral/organique de façon localisée, en recouvrant préalablement des zones choisies du pavage avec un mince revêtement organique, pouvant ensuite servir de « velcro moléculaire ». Pour cette raison, cette fonctionnalisation sera nommée dans la suite « fonctionnalisation primaire ».

Comme on le verra dans la suite, le procédé décrit dans la présente invention est intéressant car il permet, entre autres :

(i) de garantir une interface métal/organique d'une solidité inégalée (les liaisons organique/métal obtenues par électrogreffage n'ont - à ce jour - jamais pu être rompues) ;

(ii) d'offrir une capacité de fonctionnalisation « à façon » du film organique greffé (« velcro moléculaire » multi-usages), ouvrant la porte vers une large improvisation vers les surfaces « intelligentes ».

En d'autres termes, selon l'invention, en particulier, la fonctionnalisation est obtenue par l'électrogreffage de molécules organiques, polymérisables ou non, mais dont le produit d'électroréaction n'est pas électroactif, tout au moins dans la zone de potentiel permettant l'obtention du greffage. Il peut s'agir par exemple de monomères délivrant des polymères intrinsèquement isolants (monomères vinyliques, à cycle tendu, etc.), ou de molécules électroclivables. Il s'agit de molécules dont le greffage n'a lieu, en conditions électrochimiques, qu'au-delà d'un certain seuil de potentiel auquel est soumis la zone, conductrice ou semi-conductrice, du pavage, par rapport à une électrode de référence. En cela :

- Une zone du pavage est déclarée zone choisie lorsqu'elle est portée, par rapport à une électrode de référence, au potentiel permettant le greffage : ce potentiel peut être apporté par connexion électrique et multiplexage, comme il est décrit dans la demande EP-A1-0 774 662 (1996), à la description de laquelle on pourra se référer, mais également par d'autres méthodes, comme cela est illustré dans les exemples de réalisation.
- La localisation n'est due qu'à celle du pavage : ni le déclenchement, ni l'approvisionnement en précurseurs de la fonctionnalisation localisée ne sont eux-mêmes des procédés localisés. Ils sont donc également moins coûteux que les procédés existants, en termes de mise en oeuvre.
- La résolution de la méthode, dans l'enjeu de l'obtention de plots organiques sur une surface, est constituée de la résolution de la méthode de réalisation du pavage, dégradée éventuellement de la propension de la présente méthode à « baver » aux frontières des zones de pavage choisies. Comme nous le verrons, cette dernière est négligeable par rapport aux actuelles résolutions de la microélectronique.

L'invention va maintenant être décrite de manière détaillée dans la description qui va suivre, donnée à titre illustratif et non limitatif.

Dans la présente invention, la discrimination spatiale s'effectue uniquement sur le greffage du composé organique, et non pas sur son adressage matériel : la totalité de la surface composite baigne dans la solution contenant la molécule à greffer, et l'on ne polarise électriquement que la zone à greffer. Le greffage n'a donc lieu que sur la zone adressée électriquement, et nulle part ailleurs. Une fois le greffage réalisé, on sort la surface de la solution. Après rinçage, la surface complète peut à nouveau être trempée dans une autre solution (contenant une autre molécule), où une autre zone pourra alors être adressée pour greffage.

Le greffage est réalisé par électrochimie organique, au-delà d'un potentiel d'électrode repéré par rapport à une électrode de référence. Les réactions candidates sont par exemple l'électropolymérisation de monomères pouvant polymériser par voie anionique ou cationique (vinyliques ou cycles tendus, comme il est décrit par exemple dans FR-A-2 480 314), ou les réactions d'électroclivage (ainsi qu'il est décrit par exemple dans WO-A-98/44172 pour les sels de diazonium, ou encore dans WO-A-98/40450 pour les sels d'acides carboxyliques). Ces réactions ont en commun qu'elles délivrent, par électrochimie, un produit de réaction greffé chimiquement sur la surface.

Comme il est exposé ci-après, ce procédé, jamais encore considéré pour le greffage localisé de matériaux organiques, est le seul à permettre une localisation du revêtement avec une résolution dictée par tout ou partie du motif du pavage, alors que la totalité de la surface est au contact de la solution.

Cet aspect fondamentalement nouveau et inventif du procédé de l'invention trouve sa source dans l'élucidation des mécanismes des réactions de greffage, que nous rappelons brièvement ci-après. Notre attention portera sur les réactions d'électropolymérisation, mais le principe est le même avec les réactions d'électroclivage. L'exposé du mécanisme de fonctionnement de ce greffage localisé sera effectué sur l'exemple de surfaces composites de type microsystèmes électroniques (gravures d'or sur silicium ou sur silice).

Toutefois, il n'y a pas lieu de restreindre l'application du procédé selon l'invention à ce type de matériaux ni à ce type de surfaces, en effet, ce procédé s'étend à toutes les surfaces composites comportant des isolants, des semi-conducteurs et/ou des conducteurs. Ceci apparaît clairement lorsque l'on examine le mécanisme que nous proposons pour le greffage localisé. C'est la raison pour laquelle nous décrivons ici ce mécanisme avec quelque détail : l'objectif n'est pas de présenter une formalisation théorique rigoureuse, mais de montrer comment le contenu de l'invention peut être étendu à des matériaux ou à des applications non citées explicitement ici, mais pour lesquels l'homme de l'art saura tirer logiquement les conséquences permettant une amélioration technique.

On décrit donc, dans ce qui suit, le mécanisme chimique du greffage par électropolymérisation de monomères vinyliques.

a. Mécanisme

On réalise l'électropolymérisation d'un monomère vinylique sur une surface en soumettant la surface à une polarisation électrique - par rapport à une électrode de référence - tandis qu'elle plonge dans une solution le contenant. Il peut s'agir d'une polarisation négative (ou cathodique), ou bien positive (ou anodique), en fonction de la nature du monomère à polymériser.

La synthèse est réalisée en solvant organique anhydre (acétonitrile, DMF...), en présence d'un électrolyte support constitué en général d'un sel organique (par exemple le perchlorate de tétraéthyl ammonium, ou TEAP). Les modes opératoires de synthèse ont été décrits dans la littérature[6]. Comme il a été précisé dans la littérature[7, 8], l'électropolymérisation de monomères vinyliques donne deux produits de réaction, structurellement identiques mais aisément séparables :

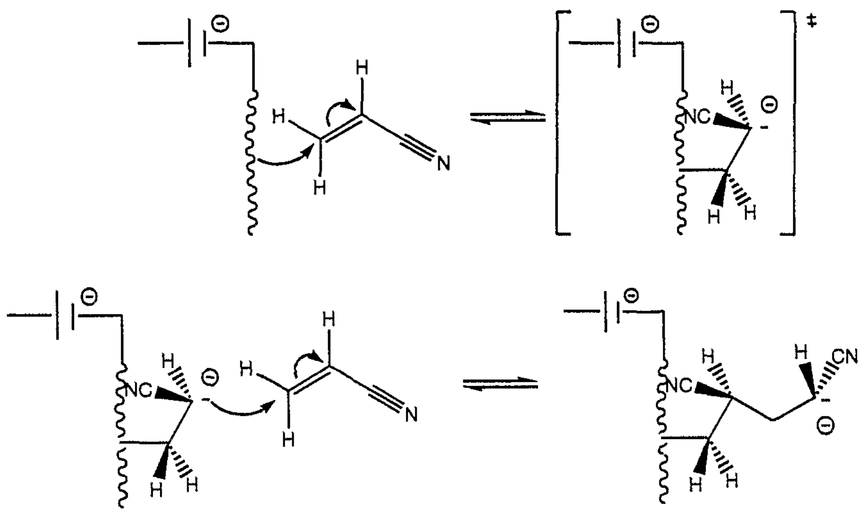

1. 1. : Réaction chimique de surface ("surface chemical reaction"), greffage ("grafting")

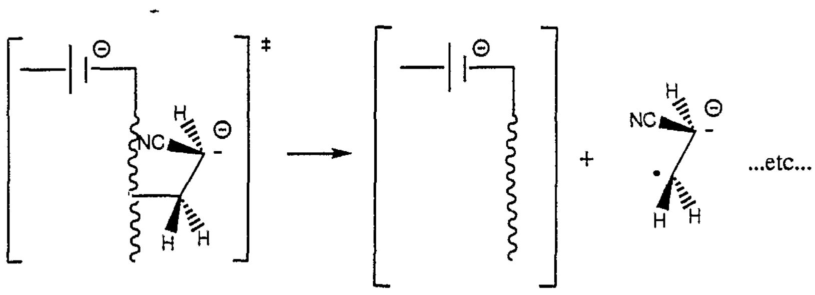

1. 2. : Désorption ("desorption"), polymérisation en solution ("polymerization in solution")

Les schémas 1. 1. et 1. 2., ci-dessus, décrivent le mécanisme réactionnel rendant compte : (1. 1.) du greffage de polymère ; (1. 2.) de la formation du radical anion en solution, provoquant la formation du polymère en solution (voir schéma 2). Les schémas portent sur l'exemple de l'acrylonitrile.

- Un polymère chimiquement greffé sur la surface, dont l'épaisseur peut atteindre une centaine de nanomètres environ. La liaison chimique d'interface a été mise en évidence par spectroscopie de photoélectrons X (XPS) sur des films minces[9], ainsi que par diverses autres méthodes[10]. Ce film résiste au rinçage, même dans un bon solvant du polymère, même sous ultrasons. Contrairement à ce qui a été observé pour les polymères conducteurs, ce polymère greffé est présent même lorsque la surface est soumise à des mouvements de convection importants (comme lorsque la surface est en rotation rapide, aux limites de la turbulence, à plus de 10 000 tours/minute)[11]. Ces éléments ont conduit à proposer un mécanisme de greffage reposant sur une initiation de la polymérisation à partir de la surface (schéma 1) : le transfert électronique métal/molécule a lieu sur la surface de l'électrode. Dans le cas d'une polarisation cathodique par exemple, il en résulte la formation d'un radical anion adsorbé, dont la durée de vie finie conditionne la chimie couplée. Si cette durée de vie est assez longue, ce radical anion adsorbé peut s'additionner à une molécule de monomère, et former un dimère, plus stable puisque la source d'instabilité (la charge négative) s'est éloignée de la surface négative : la formation du polymère greffé a eu lieu (schéma 1-1) ;

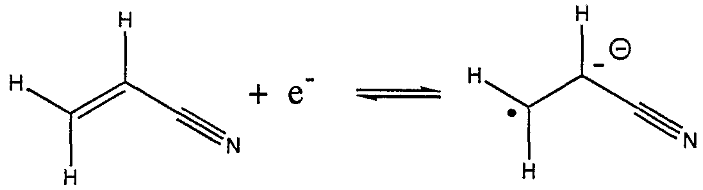

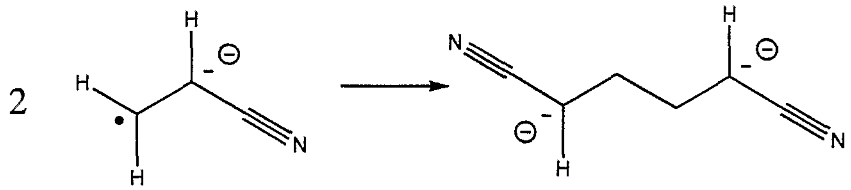

RRC dimérisation

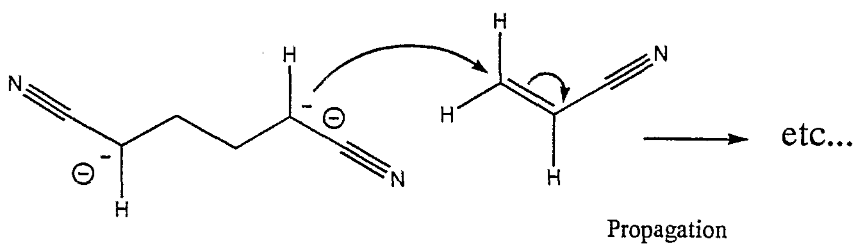

Propagation

Le schéma 2, ci-dessus, décrit le mécanisme réactionnel siégeant à la formation du polymère en solution, à la suite de la désorption du radical anion (schéma 1-2), lors des réactions d'électropolymérisation.

- Un polymère non greffé, encore nommé « polymère en solution », de même structure que le polymère greffé, mais aisément éliminé par rinçage avec un bon solvant du polymère. Il a été proposé que ce polymère résulte de la désorption du radical anion constituant l'intermédiaire réactionnel, faute de disponibilité d'un monomère frais pendant la durée de vie du radical anion sur la surface (schéma 1-2). La polymérisation qui en résulte a lieu intégralement en solution, puis le polymère prend en masse sur la surface (schéma 2).

b. Nature du transfert électronique métal/molécule

C'est évidemment - ici - le polymère greffé qui présente un intérêt majeur pour l'invention proposée. De façon à comprendre comment on peut localiser le greffage sur une surface composite, il est indispensable de détailler la façon dont le transfert électronique a lieu.

Il a été démontré que la description du transfert électronique métal/molécule peut être très avantageusement effectuée dans le cadre d'un modèle acide-base de Lewis[7, 12]. Dans ce modèle, chaque antagoniste (la surface métallique polarisée et la molécule de monomère en regard) possède un potentiel chimique global, $\mu$ : ce potentiel chimique peut être défini de façon très rigoureuse du point de vue mathématique, mais est également mesurable[7, 8]. Pour une surface métallique, le potentiel chimique est par exemple égal à l'opposé du travail de sortie du métal (et s'exprime en général en électron-volts). On démontre également que le potentiel chimique est égal, en toute généralité, à l'opposé de l'électronégativité, notion plus intuitive - mais strictement synonyme, au signe près - pour le description des transferts électroniques.

La propension à l'échange électronique entre les deux systèmes est simplement reliée à ces potentiels chimiques. On peut l'évaluer semi-quantitativement au travers du nombre d'électrons $\Delta N$ échangés du fait de cette différence de potentiels chimiques :

$$\Delta N = K_{AB}\left(\mu_B - \mu_A\right) \qquad \text{(E1)}$$

où A et B sont respectivement l'acide et la base de Lewis dans l'interaction, c'est-à-dire l'accepteur et le donneur d'électrons, et $K_{AB}$ est une constante positive. Dans l'équation (E1), il est donc dit que le transfert d'électrons a lieu du potentiel chimique le plus haut vers le potentiel chimique le plus bas (ou encore : de l'électronégativité la plus basse vers l'électronégativité la plus haute).

Il a, de plus, été démontré que lorsqu'un métal est relié à-un potentiel extérieur (une pile, par exemple), alors le potentiel chimique du métal est linéairement relié au potentiel d'électrode imposé expérimentalement, $\Delta E$[7, 12] :

$$\mu_{métal} = -\Delta E + cste\left(Réf, solvant\right) \qquad \text{(E2)}$$

où la constante ne dépend que du solvant utilisé et de la nature de l'électrode de référence. Un raisonnement simple permet de montrer que cette constante est mesurable, et égale à : $cste = \Delta E_{PZC} - \Phi$, où $\Delta E_{PZC}$ est le potentiel de charge nulle du métal dans la solution (mesurable) et $\Phi$ son travail de sortie dans le vide (mesurable également)[7, 12].

En rapprochant le contenu des équations (E1) et (E2), on en conclut que la polarisation du métal tend à promouvoir et à exacerber les écarts de potentiel chimique entre la surface et la molécule, et donc à augmenter la propension à l'échange électronique. Quand on polarise négativement ($\Delta E<0$), le potentiel chimique de la surface devient de plus en plus élevé, dépasse celui de la molécule et tend à promouvoir un transfert métal => molécule : c'est ce qui aboutit au schéma réactionnel décrit sur le schéma 1, effectivement obtenu sous polarisation cathodique. La vitesse à laquelle se produit cet échange électronique conditionne le courant électrique qui passe dans le circuit.

A quelle vitesse se produit cet échange (?) La réponse vient de la théorie de MARCUS, qui indique que le courant i-obéit à une loi du type (théorie de MARCUS) :

$$i = k_0 e^{-\frac{E_a}{kT}}\Gamma \qquad \text{(E3)}$$

où $E_a$ est une énergie d'activation, que le système doit franchir pour que le transfert électronique ait effectivement lieu, et $\Gamma$ une grandeur caractéristique de la concentration de l'espèce moléculaire au voisinage de la surface.

On décrit maintenant, dans ce qui suit, le mécanisme électronique du greffage localisé.

Des trois équations (E1)-(E3), on déduit facilement la possibilité d'un transfert électronique localisé, et donc d'un greffage localisé si ce transfert électronique est celui ayant lieu dans une réaction d'électropolymérisation.

En effet, considérons deux surfaces de natures différentes, comme par exemple une surface d'or $S_1$ et une

surface de silicium $S_2$, ayant chacune leur travail de sortie respectif, $\Phi_1$ et $\Phi_2$, et leur potentiel de charge nulle respectif, $\Delta E_{PZC}^1$ et $\Delta E_{PZC}^2$ On a représenté la position des potentiels chimiques lorsque les deux surfaces sont à leur potentiel de charge nulle. (N. B. : on a estimé que les potentiels de charge nulle étaient voisins, pour pouvoir être atteints simultanément, lorsque les deux surfaces sont en contact électrique) : l'or, ayant un travail de sortie (en solution) plus faible que le silicium, est placé au-dessus du silicium.

Prenons l'exemple de l'interaction de ces surfaces avec l'acrylonitrile (schéma 1). On trouve, quantitativement, que ces deux niveaux sont au-dessus de celui de l'acrylonitrile[7]. Pourtant, au PZC, aucun courant ne passe, car les barrières d'activation (équation (E3)) sont trop hautes, aussi bien pour un transfert or/acrylonitrile (barrière $E_a^1$) que pour un transfert silicium/acrylonitrile (barrière $E_a^2$).

Si l'on polarise maintenant négativement la surface composite or/silicium, on sait (équation (E2)) que cela fait monter les potentiels chimiques des deux surfaces (toujours en contact électrique). Le potentiel chimique de la molécule restant- en première approximation - inchangé, la théorie de MARCUS nous indique que ce sont alors les énergies d'activation qui diminuent quand on polarise : l'or étant au-dessus du silicium, sa barrière d'activation sera abaissée la première, et on parviendra à promouvoir le transfert or/acrylonitrile alors que le transfert silicium/acrylonitrile sera toujours inopérant. En clair, le premier courant qui sera mesuré passera presque exclusivement par l'or, ce qui revient à dire (schéma 1) qu'il n'y aura de greffage de polyacrylonitrile quasiment que sur l'or et pas sur le silicium.

Il est donc tout à fait important de constater que le greffage localisé utilisant les réactions d'électropolymérisation procède d'une sélectivité cinétique : on a du polymère greffé sur $S_1$ et pas sur $S_2$ parce que le transfert électronique et donc la croissance du film greffé sont plus rapides sur $S_1$ que sur $S_2$, et non pas parce qu'ils sont impossibles sur $S_2$.

En d'autres termes, un diagramme énergétique des niveaux accessibles aux électrons lorsque deux surfaces $S_1$ et $S_2$, reliées électriquement, sont plongées dans une solution contenant une molécule vers laquelle elles peuvent transférer des électrons a été réalisé (només 1A et 1B) (1A) : on impose aux deux surfaces un potentiel $\Delta E$ égal à leur PZC [(a) $\Delta E = \Delta E_{PZC}$]. On note que la barrière d'activation est plus haute pour un transfert électronique depuis $S_2$ que depuis $S_1$. (1B): on a appliqué un potentiel d'électrode égal à E°, par rapport au PZC [(b) $\Delta E = E° + \Delta E_{PZC}$], et déplacé corrélativement les niveaux de $S_1$ et $S_2$ ($E°<0$). On voit que la barrière d'activation de $S_1$ ($E_a^1$) disparaît avant celle de $S_2$ : il existe donc une situation intermédiaire où l'on peut permettre le passage des électrons par la surface $S_1$ et pas encore par $S_2$.

Le procédé de greffage localisé par électropolymérisation a lieu quel que soit l'endroit où la mise sous potentiel est appliqué, pour peu que les différentes zones du pavage de la surface composite soient portées au potentiel voulu, permettant le greffage (on peut noter qu'il peut y avoir une chute ohmique entre les différents pavages. C'est par exemple le cas entre une piste d'or et le silicium ou la silice sous-jacente, dans une puce, attendu qu'il a, en général, fallu réaliser une sous-couche sous l'or, pour améliorer son adhérence) : comme on le verra dans les exemples d'application, le résultat est identique (c'est-à-dire que le greffage a lieu uniquement sur l'or) que l'on place le contact électrique sur l'or ou sur le silicium.

Le raisonnement appliqué ici à l'or et au silicium reste valable pour deux surfaces quelconques, reliées électriquement, et ayant des travaux de sortie suffisamment différents pour que la discrimination ait lieu en termes de barrières d'activation. Il est par exemple envisageable, sur le principe, de réaliser un greffage sélectif sur certaines facettes d'un polycristal constitué d'un pavage de monocristaux, puisque l'on sait que le travail de sortie d'une surface monocristalline dépend de l'orientation cristallographique (théorie de MARCUS).

Grâce à ce mécanisme, on comprend également pourquoi il est primordial que le polymère (et plus généralement le revêtement organique greffé) résultant de la réaction d'électrogreffage soit un isolant, et pourquoi il n'est pas possible de réaliser un greffage localisé à l'aide de monomères donnant des polymères conducteurs, comme le thiophène ou le pyrrole. En effet :

- Le mécanisme du schéma 1 n'est pas valable pour les monomères conducteurs : il n'y a pas de réaction de greffage, et l'essentiel de la chimie couplée au transfert a lieu en solution. On ne peut donc détecter la trace chimique de la zone géographique où le transfert électronique a eu lieu.
- Lorsque du polymère conducteur se forme sur la surface à un endroit, il est lui-même susceptible d'autoriser le passage du courant, avec une barrière d'activation qui restera inférieure à celle du silicium : le polymère formé constitue une tierce surface conductrice, qui va donc croître sur lui-même et s'étaler, pour bientôt couvrir l'ensemble de la surface. Si le transfert a bien été initialisé de manière locale, la chimie qui en découle efface le souvenir de cette localisation.

On va maintenant décrire les caractéristiques expérimentales définissant généralement le procédé selon l'invention.

Réactifs utilisables et milieu de synthèse

Les détails avancés dans ce qui précède montrent que les réactifs utilisables sont tout d'abord les monomères polymérisables par voie ionique, et conduisant à un polymère isolant.

Il peut donc s'agir par exemple :

- des monomères, par exemple, à base vinylique polymérisables ou initiables par voie ionique. Ces monomères sont, par exemple, de formule générique B-R-A, où R est un groupement portant une double liaison vinylique, B est un groupement fonctionnel électroattracteur ou électrodonneur (moteur de polymérisation), et b est un groupement fonctionnel quelconque, portant une fonction que l'on désire conférer au polymère final. Sont par exemple initiables par polarisation cathodique : l'acrylonitrile[6, a], le méthacrylonitrile[6, a], le para-chloro styrène[16], la 4-vinyl pyridine[17], les alkyl méthacrylates (méthyl méthacrylate, éthyl méthacrylate, butyl méthacrylate, etc.), les cyano acrylates, etc.. Sont par exemple initiables par polarisation anodique la 4-vinyl pyridine[17], la N-vinyl pyrrolidone[6, b], etc. ;
- de toutes les molécules comprenant au moins un cycle tendu ou à base de cycles tendus qui peut (peuvent) être ouvert(s) par attaque nucléophile ou électrophile, comme les molécules à groupement époxy et plus généralement les oxiranes.

On peut considérer comme étant utilisables tous ces monomères, les monomères fonctionnalisés dérivés de ces monomères de base, ainsi que tous les mélanges de ces monomères, pour autant qu'ils respectent les contraintes de synthèse par voie électrochimique conduisant à un greffage sur la surface polarisée.

Dans les réactions d'électropolymérisation par voie cathodique par exemple, la polymérisation couplée au transfert de charge est une polymérisation anionique[18].

Peuvent également être candidates les molécules portant des groupements fonctionnels électroclivables, donnant des radicaux pouvant se greffer chimiquement sur la surface. On peut par exemple citer les sels de diazonium - tels que décrits dans les demandes WO-A-98/44172, à la description de laquelle on pourra se reporter - ou encore les sels d'acide carboxylique - tels que décrits dans WO-A-98/40450, à la description de laquelle on pourra se reporter.

Quel que soit le type de molécule choisi pour réaliser l'électrogreffage, on peut rajouter au milieu réactionnel un électrolyte support, pour faciliter le passage du courant électrique dans la solution.

Protocole de mise sous potentiel

Le potentiel auquel on soumet l'électrode de travail, par rapport à l'électrode de référence, a un rôle tout à fait déterminant sur l'obtention d'une réaction d'électrogreffage.

Les voltammogrammes mesurés pour les monomères vinyliques en solvant organique, par exemple, présentent en général un pic, relié au potentiel redox du monomère considéré. Pour la plupart des monomères vinyliques examinés à ce jour, il existe un régime de concentration assez particulier, où les voltammogrammes comportent deux pics, alors qu'il n'y a qu'un seul type de réaction de transfert de charge. Il a été démontré que le premier pic est dû à la consommation massive du monomère au voisinage de l'électrode du fait de la polymérisation en solution, alors que le second pic correspond à la réaction à l'électrode du monomère n'ayant pas été consommé par la polymérisation[19].

Ce résultat fournit une information précieuse, quelle que soit la gamme de concentration en monomère : au-delà du potentiel de pic, on fabrique essentiellement du polymère en solution. On peut donc adapter le protocole de potentiel en fonction de cette information de façon à augmenter le rendement du polymère greffé :

- Si l'on travaille avec une solution sans agent réticulant, tout ce qui est formé en solution est « perdu » au rinçage : quel que soit le protocole de potentiel (conditions voltammétriques, multicréneaux, etc.), il est préférable de choisir un potentiel d'arrêt (ou de rebroussement) inférieur au potentiel de pic.

- Si l'on travaille avec des additifs permettant de solidariser le polymère greffé du polymère non greffé (agents réticulants, voir paragraphe suivant), il est préférable de choisir le potentiel d'arrêt au-delà du potentiel de pic.

De la même façon, il a été démontré qu'un greffage optimal peut être obtenu avec les molécules à groupement fonctionnels électroclivable au-delà d'un certain potentiel (WO-A-98/44172 et WO-A-98/40450).

On décrit dans ce qui suit les potentialités du greffage localisé.

Le greffage localisé, tel qu'on vient d'en exposer le principe, et tel qu'il est illustré dans les exemples d'application qui suivent, peut être utilisé de plusieurs façons :

- On peut greffer localement un film organique brut, de façon - par exemple - à promouvoir une zone électriquement isolante, ou bien effectuer le dépôt localisé d'une substance aux propriétés particulières (chimique, physique (polarité

ou autre), optique, magnétique, etc.). Dans ce dernier cas, il aura alors fallu préalablement fonctionnaliser le précurseur du film organique avec la fonction adéquate, avant électrogreffage.

- Le film organique localement greffé peut être fonctionnalisé ou modifié a posteriori, pour lui conférer des propriétés (chimique, physique, optique, magnétique, etc.) qu'il n'avait pas au départ, et qui seront - de fait - elles aussi localisées, même si elle est effectuée par trempage global. On peut par exemple cuire a posteriori le polyacrylonitrile électrogreffé pour le rendre conducteur électrique et bon candidat à la lubrification. Toujours, par exemple, dans le but de le rendre conducteur électrique, le polymère greffé localement peut être dopé. On sait, par exemple, « truffer » les polymères avec des sels d'argents, qui peuvent être ensuite révélés in situ avec un développeur (réducteur) photographique (hydroquinone, pyrogallol, p-phénylène diamine, p-amino phénol, etc.), rendant le polymère conducteur[21]. Par ce procédé, on peut donc réaliser, par exemple, des zones conductrices souples.
- Le film organique peut être fonctionnalisé a priori, de façon spécifique, de manière à constituer un « velcro moléculaire », sur lequel toute fonctionnalisation ultérieure demeurera localisée, même si elle est effectuée par trempage global. On peut par exemple envisager de réaliser un collage localisé en ayant introduit un monomère vinylique fonctionnalisé par des fonctions amines (protégées, le cas échéant) dans la formulation : une fois déprotégées, les fonctions amines peuvent alors réagir sélectivement avec une colle époxy. Le collage n'est évidemment qu'un exemple, et tout type de fonctionnalité peut être localement ajouté (lubrification, propriétés optiques, chimiques, physiques, magnétiques, etc.), puisque le problème a été déplacé : la localisation ayant été obtenue grâce au greffage de polymère, on est ramené à un problème de chimie sur polymère, peu importe la localisation, celle-ci étant alors implicite.
- Le film organique greffé peut également servir de masque : supposons que l'on veuille greffer - dans l'exemple du wafer de silicium recouvert d'or - sur le silicium et non pas sur l'or. Ceci est impossible de façon directe. On peut par contre procéder en plusieurs étapes : (i) greffer un film organique quelconque sur l'or ; (ii) greffer le film organique voulu sur le silicium (puisque les pistes d'or sont protégées (et en particulier isolantes) une fois recouvertes d'un film de polymère par exemple ; (iii) dégreffer le polymère déposé sur l'or. Compte-tenu de ce qui a été exposé ci-dessus, les deux premières étapes peuvent éventuellement être réunies en une seule en poussant le potentiel d'arrêt du protocole expérimental au-delà du potentiel de pic.
- On peut également inverser les tendances naturelles en masquant, au préalable, la surface que l'on souhaite préserver avec toute substance qui s'y adsorbera spécifiquement, même sur une monocouche : l'idée sous-jacente consiste à augmenter le travail de sortie de la surface $S_1$ par rapport à $S_2$, et de la faire « passer au-dessous » grâce à un traitement préalable. Les thiols sont ainsi des candidats corrects pour masquer l'or, les silanols (comme le $\gamma$-APS) pour $SiO_2$, etc.

L'invention va maintenant être décrite en référence aux exemples suivants, donnés à titre illustratif et non limitatif.

<u>Exemples</u>

1. <u>Régiosélectivité du greffage : nature des échantillons</u>

Deux séries d'échantillons ont été considérées. Tout d'abord les échantillons (només 2A et 2B) de surfaces composites examinés sont de géométrie rectangulaire, de dimensions 10 x 50 mm. Le silicium est obtenu par épitaxie de silicium dopé p ou n sur substrat SOI ($SiO_2$). L'or est obtenu par dépôt sous vide sur sous-couche de titane/nickel, sur substrat SOI ou sur silicium, selon l'échantillon.

La couche de Si épitaxiée sur $SiO_2$ est de 480 nm. La sous-couche Ti-Ni est composée de 250 nm de Ti et 450 nm de Ni. La couche d'or a une épaisseur de 200 nm.

Analyses XPS sur échantillons Au/$SiO_2$ et Au/Si vierges :

- côté Au : 55.9% Au, 31.6% C, 12.0% O, 0.5% N ;
- Côté $SiO_2$ : 44.9% Si, 3.8% C, 50.5% O, 0.3% Au, 0.3%, N, 0.2% Ti, trace Ni ;
- Côté Si : 32.8% Si, 14.4% C, 51.6% O, 0.3% Au, 0.3% N, 0.8% Ti, trace Ni.

Analyse profilométrique du bord de marche des échantillons mixtes Au/$SiO_2$ et Au/Si avant dépôt organique : hauteur de marche = 760 $\pm$ 10 nm.

Ensuite, nous avons également considéré des peignes interdigités d'or sur silice épaisse, (nomé 3A), obtenus par photolithographie. Trois types de peignes ont été réalisés, dont les distances entre deux dents interdigitées sont respectivement de 128, 32 et 8 $\mu$m.

De manière plus précise, deux peignes d'or interdigités (3A), ont été photolithographiés sur une surface de silice épaisse. Trois échantillons ont été réalisés, où les distances entre les dents interdigitées sont respectivement de 128 $\mu$m, 32 $\mu$m et 8 $\mu$m. Un montage (nomé 3B) est réalisé pour contacter le double peigne, par exemple (3A), sur un

substrat époxy à pistes de cuivre, pour connexion au boîtier électrique et au potentiostat. Il comprend un boîtier d'adressage électrique, le substrat époxy, les pistes de Cu, les contacts dorés, et enfin les peignes $SiO_2$/Au. Les surélévations d'or constituant les dents des peignes ont une hauteur de 115 nm environ, tel que mesuré par microscopie à force atomique (AFM) ou par profilométrie. De manière plus précise, des profils d'épaisseur (només 4A, 4B et 4C) des trois types de peignes interdigités photolithographiés (avec respectivement, des distances entre les dents interdigitées de 8, 32 et 128 $\mu$m), réalisés montrent que les rugosités apparentes en haut de chaque dent de peigne ne sont pas pertinentes, étant donné que les distances entre dents et les largeurs de dents sont du même ordre de grandeur que la précision latérale de l'appareil.

2. Caractéristiques du protocole de synthèse

- Solution : Méthacrylonitrile (40 %) dans DMF, en présence de $5.10^{-2}$ M de tétraéthyl-ammonium perchlorate (TEAP).
- Cellule : TEFLON®, sans compartiments séparés, volume 13 ml.
- Contre-électrode : feuille de Pt 10.4 $cm^2$.
- Electrode de référence : $Ag/AgClO_4$.
- Surface électrode de travail : 3 $cm^2$ pour les échantillons composites rectangulaires.
- Electrochimie : N cycles, conditions voltammétriques : 100 mV/s, avec compensation chute ohmique = IR. Gamme de potentiel : $V_{on}$ à $V_{off}$. La totalité de la lame est trempée dans le milieu de synthèse. Le contact électrique (pince crocodile) est réalisé soit sur l'or soit sur l'autre matériau du pavage.
- Rinçage électrode : 15 minutes sous ultrasons dans l'acétone + 15 minutes sous ultrasons dans l'eau.

3. Analyse des échantillons

Les différents échantillons macroscopiques (lames composites) sont analysés, sur chaque pavage de la surface :

- par spectroscopie infrarouge en absorption-réflexion (IRRAS). La bande nitrile (vers 2 200 $cm^{-1}$) est également utilisée, sur les spectres IR obtenus, pour une évaluation rapide des épaisseurs de films, grâce à des abaques IRRAS/XPS/ellipsométrie réalisées sur le polyméthacrylonitrile ;
- par spectroscopie de photoélectrons X (XPS). Outre le spectre global, une acquisition complémentaire est effectuée sur la région de la raie N1s de l'azote (caractéristique du polyméthacrylonitrile). Le rapport S entre les intensités N1s sur les zones greffées et non greffées constitue notre mesure de la sélectivité du greffage localisé.

Les échantillons microscopiques (peignes interdigités) sont examinés par AFM et par profilométrie, de façon à vérifier la résolution latérale du greffage, à savoir que :

(i) deux dents distantes de 8, 32 ou 128 $\mu$m ne se retrouvent pas « jointes » par le revêtement greffé ;
(ii) si seul l'un des deux peignes est polarisé au potentiel permettant le greffage, l'autre peigne en vis-à-vis étant mis au potentiel de l'électrode de référence, le greffage n'aura lieu que sur le peigne polarisé.

4. Echantillons macroscopiques (lames composites)

Quatre séries d'échantillons ont été produites : $Si(n)SiO_2$/Au, $Si(p)SiO_2$/Au, Si(n)/Au et Si(p)/Au. Les épaisseurs des dépôts obtenus sur les pavages dorés varient de 5 à 120 nm suivant les protocoles électrochimiques, la qualité des surfaces d'or et selon la nature du dopage du silicium.

4. 1. Analyse infrarouge

Deux séries de spectres (només 5A et 5B) IRRAS comparés, dans la région des nitriles, sur le côté or et sur le côté $SiO_2$ pour un silicium dopé (p) ont été réalisés. Les épaisseurs obtenues dans les deux cas sont de l'ordre de 40 nm, mais correspondent à des surfaces d'or de qualités différentes (répertoriées en première et deuxième séries d'échantillons), et selon des protocoles électrochimiques différents (en ordonnée et portée la transmittance (u.a.) en en abscisse, et portée le nombre d'onde ($cm^{-1}$)).

Plus précisément, 5A et 5B sont les spectres IRRAS comparés sur surfaces mixtes Si(p) $SiO_2$/Au (2A et 2B) dans la zone des nitriles. Le spectre 5A a été réalisé dans les conditions suivantes : première série : 50 balayages, $V_{on}$ = -0,641 V/($Ag^+$/Ag), $V_{off}$ = -2,400 V/($Ag^+$/Ag), IR = 100 $\Omega$ ; et le spectre de la figure 5B a été réalisé dans les conditions

suivantes : deuxième série : 10 balayages, $V_{on}$ = -0,538 V/($Ag^+$/Ag), $V_{off}$ = -2,600 V/($Ag^+$/Ag), IR = 100 Ω. Les surfaces sont de provenance différente dans chaque série.

La figure 6 montre les mêmes spectres IRRAS comparés pour une surface mixte Si(n) $SiO_2$/Au de la première série.

Plus précisément, la figure 6 montre les spectres IRRAS comparés sur surfaces mixtes Si(n) $SiO_2$/Au (figures 2A et 2B) dans la zone des nitriles. Première série : 20 balayages, $V_{on}$ = -0,723 V/ ($Ag^+$/Ag), $V_{off}$ = -2,400 V/($Ag^+$/Ag), IR = 80 Ω.

Les figures 7A et 7B montrent les spectres IRRAS comparés, dans la région des nitriles, sur le côté or et sur le côté Si pour un silicium dopé (n) et (p).

Plus précisément, les figures 7A et 7B montrent les spectres IRRAS comparés sur surfaces mixtes Si/Au (figures 2A et 2B) dans la zone des nitriles. Figure 7A : Si(n), 50 balayages, $V_{on}$ = -0,599 V/($Ag^+$/Ag), $V_{off}$ = -2,300 V/($Ag^+$/Ag) ; figure 7B : Si(p), 10 balayages, $V_{on}$ = -0,747 V/($Ag^+$/Ag), $V_{off}$ = -2,400 V/($Ag^+$/Ag), IR = 70 Ω.

4. 2. <u>Analyse XPS</u>

Les figures 8A et 8B montrent les spectres XPS comparés, dans la région de la raie N1s de l'azote, sur le côté or et sur le côté $SiO_2$ pour un silicium dopé (p), pour les mêmes échantillons - respectivement - que ceux des figures 5A et 5B. Les figures 9 et 10 montrent l'analyse XPS de la raie N1s pour les échantillons des figures 6, 7A et 7B.

Plus précisément, les figures 8A et 8B montrent les spectres XPS comparés sur surfaces mixtes Si(p) $SiO_2$/Au (figures 2A et 2B) dans la région N1s de l'azote. Figure 8A (première série) : 50 balayages, $V_{on}$ = -0,641 V/($Ag^+$/Ag), $V_{off}$ = -2,400 V/($Ag^+$/Ag), IR = 100 Ω ; figure 8B (deuxième série) : 10 balayages, $V_{on}$ = -0,538 V($Ag^+$/Ag), $V_{off}$ = -2,600 V/($Ag^+$/Ag), IR = 100 Ω. Les surfaces sont de provenance différente dans chaque série.

La figure 9 montre les spectres XPS comparés sur surfaces mixtes Si(n) $SiO_2$/Au (figures 2A et 2B) dans la région N1s de l'azote : 20 balayages, $V_{on}$ = -0,723 V/($Ag^+$/Ag), $V_{off}$ = -2,400 V/($Ag^+$/Ag), IR = 80 Ω.

Les figures 10A et 10B montrent les spectres XPS comparés sur surfaces mixtes Si/Au (figures 2A et 2B) dans la région N1s de l'azote. Figures 10A : Si(p), 50 balayages, $V_{on}$ = -0,599 V/($Ag^+$/Ag), $V_{off}$ = -2,300 V/($Ag^+$/Ag) ; figure 10B : Si(p), 10 balayages, $V_{on}$ = -0,747 V/($Ag^+$/Ag), $V_{off}$ = -2,400 V/($Ag^+$/Ag), IR = 70 Ω.

4. 3. <u>Résultats</u>

Le Tableau I répertorie les conditions opératoires et sélectivités de greffage obtenues pour les divers échantillons. Sauf mention spéciale, le contact électrique permettant la polarisation a toujours lieu du côté de l'or.

5. <u>Echantillons microscopiques (peignes interdigités)</u>

Dans toute cette série, la polarisation est effectuée par l'or (montage et 3B). Un protocole de 10 balayages voltammétriques jusqu'à un potentiel de retour de -2.4 V/($Ag^+$/Ag) a été choisi, et une compensation de chute ohmique de 100 Ω.

Deux types de polarisation sont appliqués, permettant de vérifier respectivement les points (i) et (ii), tels que mentionnés au paragraphe 3. ci-dessus :

(i) les deux peignes sont polarisés au même potentiel de -2.4 V/($Ag^+$/Ag) par rapport à l'électrode de référence ;
(ii) seul l'un des deux peignes est mis au potentiel de -2.4 V/($Ag^+$/Ag), l'autre étant relié à l'électrode de référence.

5.1. <u>Polarisation uniforme des deux peignes</u>

Une analyse de profil par microscopie à force atomique (AFM) du peigne (3A) où les dents des peignes interdigités sont espacés de 8 μm a été réalisée selon une direction perpendiculaire aux dents des deux peignes. On peut observer qu'il n'y a aucune bavure sur les bords des dents de peigne, alors que les hauteurs de dent sont de 200 nm, soit supérieures de 85 nm à celles des peignes avant greffage (analyses profilométriques 4A à 4C) : le protocole a donc permis le greffage de 85 nm de polymère sur chaque dent, avec une bavure latérale très faible devant l'espacement entre les dents des peignes interdigités. Plus précisément, une image (nomée 11A) et une analyse profilométrique (nomée 11B), par microscopie à force atomique (AFM), du peigne 3A où les dents des peignes interdigités sont espacées de 8 μm, après polarisation des deux peignes à un potentiel de -2,4 V/($Ag^+$,Ag) ont été réalisées. La hauteur des dents de peigne avant polarisation est de 115 nm.

Tableau I : Conditions opératoires et sélectivité du greffage sur des surfaces mixtes Au/$SiO_2$ et Au/Si. La sélectivité a été mesurée par XPS, en faisant le rapport des intensités des raies N1s sur chaque pavage. Ces sélectivités sont des bornes inférieures, le signal sur $SiO_2$ ou Si étant le plus souvent non nul, mais rigoureusement identique à celui de l'échantillon de référence avant greffage. Les surfaces sont de provenance différente dans chaque série.

| Echantillon | N | $V_{on}$ (V/($Ag^+$/Ag)) | $V_{off}$ (V/($Ag^+$/Ag)) | IR (Ω) | Epaisseur (nm) | N(Au)/N (SiX) |
|---|---|---|---|---|---|---|
| Si(p) $SiO_2$/Au | 50 | -0.641 | -2.4 | 100 | 42 | 90 |
| Si(p) $SiO_2$/Au[(a)] | 50 | -0.644 | -2.4 | 70 | 15 | 56 |
| Si(p) $SiO_2$/Au | 10 | -0.665 | -2.6 | 70 | 28 | 85 |
| Si(p) $SiO_2$/Au | 10 | -0.650 | -2.4 | 52 | 125 | 150 |
| Si(p) $SiO_2$/Au | 10 | -0.538 | -2.6 | 100 | 45 | 140 |
| Si(n) $SiO_2$/Au | 50 | -0.960 | -2.6 | 100 | 5 | 66 |
| Si(n) $SiO_2$/Au | 10 | -0.628 | -2.6 | 100 | 18 | 100 |
| Si(n) $SiO_2$/Au | 20 | -0.723 | -2.4 | 80 | 55 | 80 |
| Si(n) $SiO_2$/Au[(a)] | 50 | -0.689 | -2.4 | 100 | 48 | 46 |
| Si(n) /Au | 50 | -0.599 | -2.3 | 0 | 8 | 42 |
| Si(n) /Au | 50 | -0.860 | -2.6 | 100 | 5 | 65 |
| Si(n) /Au[(b)] | 50 | -0.657 | -2.6 | 0 | 38 | 14 |
| Si(p) /Au | 10 | -0.690 | -2.4 | 65 | 100 | 150 |
| Si(p) /Au | 10 | -0.747 | -2.4 | 70 | 40 | 130 |
| Si(p) /Au[(b)] | 10 | -0.723 | -2.8 | 800 | 4 | 90 |
| Si(p) /Au[(b)] | 10 | -0.698 | -2.8 | 650 | 10 | 140 |

(a) La surface de silice a été préalablement hydroxylée.
(b) Le contact électrique a été réalisé sur la partie Si.

5. 2. Polarisation d'un seul des deux peignes

Une analyse (nomée 12A et 12B) de profil par AFM du peigne de 32 μm d'espacement, selon une direction perpendiculaire aux dents des deux peignes (3A) a été réalisée. L'étendue du balayage permet d'observer deux dents interdigitées successives, appartenant chacune à un peigne. On voit que la hauteur d'origine de 115 nm est préservée sur le peigne connecté à l'électrode de référence, alors que la hauteur de 200 nm (obtenue en 5. 1.) est obtenue sur le peigne porté au potentiel où se produit le greffage : on observe que le greffage du polymère n'a bien eu lieu qu'une dent sur deux, c'est-à-dire sur un seul des deux peignes. Plus précisément, l'image (12A) et l'analyse profilométrique (12B), par microscopie à force atomique (AFM), du peigne 3A, où les dents des peignes interdigités sont espacées de 32 μm, après polarisation d'un des deux peignes à un potentiel de -2,4 V/($Ag^+$/Ag), l'autre étant connecté à l'électrode de référence ont été réalisées. La hauteur des dents de peigne avant polarisation est de 115 nm. C'est aussi celle du peigne qui a été connecté à l'électrode de référence.

6. Electro-greffage organique sur des nanotubes de carbone

On illustre ici les capacités de fonctionnalisation ultra-localisée qu'offre l'électrogreffage. L'exemple ici décrit porte sur l'électro-greffage de polymères vinyliques, mais on pourra l'étendre de façon triviale à une fonctionnalisation par les autres molécules électro-activables décrites dans l'invention ainsi que dans les exemples d'application qui suivent.

Les nanotubes de carbone apparaissent comme des objets potentiellement très riches dans le cadre du développement des nanotechnologies moléculaires. En effet pour les applications électroniques, les nanotubes présentent des propriétés isolantes, semiconductrices -ou métalliques. Des composants comme des jonctions, ou des transistors à effet de champ, ont été fabriqués. Des applications mécaniques ont été également récemment proposées avec l'utilisation des nanotubes pour la réalisation de nano-outils.

Dans le présent exemple, on réalise le contact électrique d'un nanotube de carbone comme suit : on réalise le dépôt de nanotubes sur les zones silanisées d'un substrat de silicium, puis le couchage d'une résine electrosensible sur le substrat et le nanotube. On réalise ensuite l'ouverture des zones correspondant aux électrodes par lithographie électronique, puis on évapore des électrodes métalliques, et on réalise enfin le lift-off de la résine et du film métallique aux endroits non ouverts de la résine, selon un protocole décrit dans Choi, K. H., et al., Controlled deposition of carbon nanotubes on a patterned substrate. Surface Science, 2000. 462(1-3): p. 195-202.

L'ensemble du substrat est ensuite polarisé dans le milieu organique contenant du méthacrylonitrile ou du tétrafluoroborate de para-nitrophényl diaznium, selon les mêmes protocoles que ceux des exemples précédents. On caractérise la fonctionnalisation du nanotube par AFM et STM, selon les mêmes procédures que ce qui a été fait dans le cas du double peigne dans les exemples précédents.

7. Electrogreffage localisé à partir de sels de diazonium

Les exemples précédents ont porté sur l'électro-greffage de polymère vinyliques. Nous présentons ici un exemple illustrant l'obtention d'un greffage organique localisé grâce à l'électro-activation de sels de diazonium en milieu organique.

L'électrogreffage est effectué sur les lames macroscopiques $Au/Si(p)O_2$ telles que décrites dans le paragraphe 1. des exemples. Le contact électrique est pris sur la partie or de la lame, et la totalité de la lame est trempée dans une solution contenant $10^{-3}$ mol/l de chlorure de para-nitrophényl diazonium, et $5.10^{-2}$ mol/l de TétraEthyl Ammonium Perchlorate (TEAP) dans l'acétonitrile. On réalise un balayage en potentiel de +0.37 V/($Ag^+$/Ag) à -2.4 V/($Ag^+$/Ag), à une vitesse de balayage de 50mV/s.

Les deux parties de la surface sont ensuite analysées par spectroscopie IRRAS (nomé 13) et par XPS (14). On observe bien, comme dans le cas de l'électrogreffage de polymères vinyliques, que le greffage organique n'a eu lieu que sur l'or et pas sur la partie $SiO_2$.

De manière plus précise, (13) correspond à des spectres IRRAS d'une lame composite (cf. paragraphe 1. des exemples) $Au/Si(p)O_2$ polarisée par l'or dans une solution contenant du chlorure de para-nitrophényl diazonium (exemple 7). On distingue clairement les raies caractéristiques du groupement nitro autour de 1500 $cm^{-1}$.

(14) correspond à la région N1s des spectres XPS d'une lame (cf. paragraphe 1. des exemples) $Au/Si(p)O_2$ polarisée par l'or dans une solution contenant du tétrafluoroborate de para-nitrophényl diazonium, sur la partie Au et sur la partie $SiO_2$.

8. Electrogreffage localisé à partir d'arylacétates

Nous présentons ici un exemple illustrant l'obtention d'un greffage organique localisé grâce à l'électroactivation d'arylacétates en milieu organique.

L'électrogreffage est effectué sur les lames macroscopiques $Au/Si(p)O_2$ telles que décrites dans le paragraphe 1. Le contact électrique est pris sur la partie or de la lame, et la totalité de la lame est trempée dans une solution contenant $4.10^{-3}$ mol/l de phénylacétate, et 0.1 mol/l de $(n\text{-}Bu)_4PF_6$ dans l'acétonitrile. On réalise 10 balayages de potentiel, aller-retour, de +0.5 V/ECS à +1.25 V/ECS, à une vitesse de balayage de 200 mV/s.

Les surfaces sont caractérisées comme dans l'exemple précédent, et l'on obtient également un greffage sélectif sur l'or.

REFERENCES

1 - WO-A-99/24868.

2 - WO-A-98/58745.

3 - FR-A-2 787 581 et FR-A-2 787 582.

4 - WO-A-99/38612.

5 - WO-A-96/29629.

6, a - G. DENIAU, G. LECAYON, P. VIEL, G. HENNICO, J. DELHALLE, Langmuir, 8 (1992) 267.

6, b - E. LEONARD-STIBBE, G. LECAYON, G. DENIAU, P. VIEL, M. DEFRANCESCHI, G. LEGEAY, J. DELHALLE, Journal of Polymer Science A, 32 (1994) 1551.

7, a - C. BUREAU, G. DENIAU, P. VIEL, G. LECAYON and J. DELHALLE, Journal of Adhésion, 58 (1998) 101.

7, b - C. BUREAU and G. LECAYON, Journal of Chemical Physics, 106 (1997) 8 821.

8 - C. BUREAU and J. DELHALLE, Journal of Surface Analysis, 6 (1999) 159.

9 - G. DENIAU, P. VIEL and G. LECAYON, Surface and Interface Analysis, 18 (1992) 443.

10, a - P. JONNARD, F. VERGAND, P. F. STAUB, C. BONNELLE, G. DENIAU, C. BUREAU, G. LECAYON, Surface and Interface Analysis, 24 (1996) 339.
10, b - G. TOURILLON, R. GARRETT, N. LAZARZ, M. RAYNAUD, C. REYNAUD, G. LECAYON, P. VIEL, Journal of the Electrochemical Society, 137 (1990) 2 499.
11 - P. VIEL, C. BUREAU and G. LECAYON, Journal of Electroanalytical Chemistry, 470 (1999) 14.
12 - C. BUREAU, Thèse de Doctorat, Université Paris VI (1994).
16 - G. DENIAU, G. LECAYON, P. VIEL, G. ZALCZER, C. BOIZIAU, G. HENNICO and J. DELHALLE, Journal of the Chemical Society, Perkin Transactions, 2 (1990) 1 433.
17 - C. LEBRUN, G. DENIAU, P. VIEL, G. LECAYON, Surface Coatings Technology, 100 - 101 (1998) 474.
18 - C. BUREAU, G. DENIAU, P. VIEL and G. LECAYON, Macromolecules, 30 (1997) 333.
19 - C. BUREAU, Journal of Electroanalytical Chemistry, 479 (1999) 43.
21 - C. C. YEN, Journal of Applied Polymer Science, 60 (1996) 605.

## Revendications

**1.** Procédé de greffage localisé sans masque de molécules organiques susceptibles d'être électriquement activées sur une surface, par mise en contact desdites molécules organiques avec ladite surface, dans lequel lesdites molécules sont greffées par électrogreffage, ledit électrogreffage étant réalisé en une seule étape sur des zones de ladite surface choisies, définies, portées à un potentiel supérieur ou égal à un potentiel électrique seuil déterminé par rapport à une électrode de référence, ledit potentiel électrique seuil étant le potentiel au-delà duquel se produit l'électrogreffage desdites molécules organiques **caractérisé en ce que** ladite surface est une surface composite comprenant des portions conductrices et/ou semi-conductrices.

**2.** Procédé selon la revendication 1, dans lequel la surface composite est constituée d'un pavage de matériaux de natures différentes.

**3.** Procédé selon la revendication 2, dans lequel les matériaux de natures différentes diffèrent par au moins l'un des paramètres suivants : travail de sortie électronique dans le vide, solvatation de la surface par un solvant d'électrolyse, acidité de Brönsted dans le solvant d'électrolyse.

**4.** Procédé selon l'une quelconque des revendications 1 à 3, dans lequel ladite surface composite est une surface de silicium et d'or ou de dioxyde de silicium et d'or.

**5.** Procédé selon la revendication 1, dans lequel lesdites molécules organiques sont choisies parmi les molécules électro-greffables et les molécules électroclivables.

**6.** Procédé selon la revendication 5, dans lequel lesdites molécules électroclivables sont choisies parmi les sels de diazonium, les sels de phosphonium, les sels de sulfonium, les sels d' acide carboxylique, les acétates d'aryle, les alcools aliphatiques et les amines.

**7.** Procédé selon la revendication 5, dans lequel lesdites molécules électro-greffables sont choisies parmi les monomères vinyliques de formule B-R-A, où R est un groupement portant une double liaison vinylique, A est un groupement fonctionnel électroattracteur ou électrodonneur, et B est un groupement fonctionnel quelconque, par exemple portant une fonction que l'on désire conférer au polymère final obtenu à partir desdits monomères ; les molécules comprenant au moins un cycle tendu ; les monomères fonctionnalisés dérivés desdits monomères et molécules ; et les mélanges desdits monomères et molécules.

**8.** Procédé selon la revendication 7, dans lequel ledit monomère est un monomère dont le polymère est électrogreffable par polymérisation cathodique, choisi parmi l'acrylonitrile, le méthacrylonitrile, le para-chlorostyrène, la 4-vinylpyridine, les méthacrylates d'alkyle tels que le méthacrylate de méthyle, le méthacrylate d'éthyle, et le méthacrylate de butyle, et les cyanoacrylates.

**9.** Procédé selon la revendication 7, dans lequel ledit monomère est un monomère initiable par polarisation anodique choisi parmi la 4-vinylpyridine et la N-vinylpyrrolidone.

**10.** Procédé selon la revendication 7, dans lequel ladite molécule comprenant au moins un cycle tendu est une molécule pouvant être ouverte par attaque nucléophile ou électrophile, choisie de préférence parmi les molécules à groupement époxy et les oxiranes.

**11.** Procédé selon la revendication 1 dans lequel lesdites molécules organiques greffées constituent un film organique greffé isolant.

**12.** Procédé selon la revendication 1, dans lequel lesdites molécules organiques présentent préalablement à leur greffage des propriétés particulières par exemple chimiques, physiques telles que la polarité, optiques ou magnétiques et forment un dépôt localisé possédant lesdites propriétés.

**13.** Procédé selon la revendication 1 dans lequel le film organique localement greffé formé par les molécules organiques est fonctionnalisé ou modifié a posteriori pour lui conférer des propriétés particulières par exemple chimiques, physiques, optiques ou magnétiques qu'il ne possédait pas au départ.

**14.** Procédé selon la revendication 13, dans lequel le film organique est un film de polyacrylonitrile électrogreffé qui est cuit a posteriori pour le rendre conducteur électrique et bon candidat à la lubrification.

**15.** Procédé selon la revendication 13, dans lequel le film organique localement greffé est dopé par exemple avec des sels d'argent qui peuvent être ensuite révélés par un développeur photographique.

**16.** Procédé selon l'une quelconque des revendications 1 à 15, dans lequel la surface composite est choisie parmi les surfaces des circuits de microélectronique, tels que les biopuces, les microcapteurs et les "lab-on-chips" et les surfaces des dispositifs de microfluidique, des pièces de micromécanique et d'orfèvrerie fine.

## Patentansprüche

**1.** Verfahren zum lokalisierten, maskenlosen Aufpfropfen von elektrisch aktivierbaren, organischen Molekülen auf eine Oberfläche durch Inkontaktbringen der organischen Moleküle mit der Oberfläche, wobei die Moleküle durch Elektropfropfung aufgepfropft werden, wobei die Elektropfropfung in einem einzigen Schritt an bestimmten ausgewählten Bereichen der Oberfläche erfolgt, die auf ein Potential größer oder gleich einem bestimmten elektrischen Schwellenpotential bezüglich einer Referenzelektrode gebracht werden, wobei das elektrische Schwellenpotential das Potential ist, über das hinaus die Elektropfropfung der organischen Moleküle stattfindet, **dadurch gekennzeichnet, dass** die Oberfläche eine Verbundoberfläche mit leitfähigen und/oder halbleitfähigen Abschnitten ist.

**2.** Verfahren nach Anspruch 1, wobei die Verbundoberfläche aus einer Auflage aus Materialien unterschiedlicher Beschaffenheiten besteht.

**3.** Verfahren nach Anspruch 2, wobei die Materialien unterschiedlicher Beschaffenheiten sich durch zumindest einen der nachstehenden Parameter unterscheiden: elektronische Austrittsarbeit im Vakuum, Solvatation der Oberfläche durch ein Elektrolyselösungsmittel, Brönsted-Säuregehalt in dem Elektrolyselösungsmittel.

**4.** Verfahren nach einem der Ansprüche 1 bis 3, wobei die Verbundoberfläche eine Oberfläche aus Silicium und Gold oder aus Siliciumdioxid und Gold ist.

**5.** Verfahren nach Anspruch 1, wobei die organischen Moleküle ausgewählt sind aus elektropfropfbaren Molekülen und elektrospaltbaren Molekülen.

**6.** Verfahren nach Anspruch 5, wobei die elektrospaltbaren Moleküle ausgewählt sind aus Diazoniumsalzen, Phosphoniumsalzen, Sulfoniumsalzen, Carbonsäuresalzen, Arylacetaten, aliphatischen Alkoholen und Aminen.

**7.** Verfahren nach Anspruch 5, wobei die elektropfropfbaren Moleküle ausgewählt sind aus Vinylmonomeren der Formel B-R-A, worin R eine eine Vinyldoppelbindung tragende Gruppe ist, A eine elektronenziehende oder elektronenabgebende funktionelle Gruppe ist und B eine beliebige funktionelle Gruppe ist, die beispielsweise eine Funktion trägt, die dem aus den Monomeren erhaltenen Endpolymer verliehen werden soll; aus Molekülen, zumindest einen gespannten Ring aufweisen; aus von den genannten Monomeren und Molekülen abgeleiteten funktionalisierten Monomeren; sowie aus den Gemischen der genannten Monomere und Moleküle.

**8.** Verfahren nach Anspruch 7, wobei das Monomer ein Monomer ist, dessen Polymer durch kathodische Polymerisation

elektropfropfbar ist, ausgewählt aus Acrylnitril, Methacrylnitril, Parachlorstyrol, 4-Vinylpyridin, Alkylmethacrylaten, wie Methylmethacrylat, Ethylmethacrylat und Butylmethacrylat, und Cyanacrylaten.

**9.** Verfahren nach Anspruch 7, wobei das Monomer ein durch Anodenpolarisation initiierbares Monomer ist, ausgewählt aus 4-Vinylpyridin und N-Vinylpyrrolidon.

**10.** Verfahren nach Anspruch 7, wobei das zumindest einen gespannten Ring enthaltende Molekül ein Molekül ist, das durch nucleophilen oder elektrophilen Angriff geöffnet werden kann, ausgewählt vorzugsweise aus Molekülen mit Epoxidgruppe und Oxiranen.

**11.** Verfahren nach Anspruch 1, wobei die aufgepfropften, organischen Moleküle einen aufgepfropften, organischen Isolierfilm bilden.

**12.** Verfahren nach Anspruch 1, wobei die organischen Moleküle vor ihrer Pfropfung bestimmte, beispielsweise chemische, physikalische Eigenschaften, wie etwa die Polarität, optische oder magnetische Eigenschaften aufweisen und eine lokalisierte Abscheidung mit den genannten Eigenschaften bilden.

**13.** Verfahren nach Anspruch 1, wobei der lokal aufgepfropfte organische Film, der aus den organischen Molekülen gebildet ist, nachträglich funktionalisiert bzw. modifiziert wird, um diesem bestimmte, beispielsweise chemische, physikalische, optische oder magnetische Eigenschaften zu verleihen, die er zu Beginn nicht hatte.

**14.** Verfahren nach Anspruch 13, wobei der organische Film ein Film aus elektrogepfropften Polyacrylnitril ist, der nachträglich gebrannt wird, um ihn elektrisch leitfähig und zu einem guten Kandidaten zur Schmierung zu machen.

**15.** Verfahren nach Anspruch 13, wobei der lokal aufgepfropfte organische Film dotiert wird, beispielsweise mit Silbersalzen, die dann durch einen photographischen Entwickler entwickelt werden können.

**16.** Verfahren nach einem der Ansprüche 1 bis 15, wobei die Verbundoberfläche ausgewählt ist aus Oberflächen von mikroelektrischen Schaltungen, wie etwa Biochips, Mikrosensoren und "lab-on-Chips", und Oberflächen von mikrofluidischen Vorrichtungen, Teilen der Mikromechanik und der feinen Goldschmiede.

## Claims

**1.** A process for mask-free localized grafting of organic molecules capable of being electrically activated onto a surface, by placing said organic molecules in contact with said surface, in which said molecules are grafted by electrografting, said electrografting being performed in a single step on chosen, defined areas of said surface, said areas being brought to a potential higher than or equal to a threshold electrical potential determined relative to a reference electrode, said threshold electrical potential being the potential above which electrografting of said organic molecules takes place, **characterized in that** said surface is a composite surface comprising conductive and/or semiconductive portions.

**2.** The process according to claim 1, in which the composite surface consists of a paving of materials of different natures.

**3.** The process according to claim 2, in which the materials of different natures differ in at least one of the following parameters: electronic work function under vacuum, solvation of the surface with an electrolysis solvent, Brönsted acidity in the electrolysis solvent.

**4.** The process according to any one of claims 1 to 3, in which said composite surface is a surface of silicon and gold or of silicon dioxide and gold.

**5.** The process according to claim 1, in which said organic molecules are chosen from electrograftable molecules and electrocleavable molecules.

**6.** The process according to claim 5, in which said electrocleavable molecules are chosen from diazonium salts, phosphonium salts, sulfonium salts, carboxylic acid salts, aryl acetates, aliphatic alcohols and amines.

**7.** The process according to claim 5, in which said electrograftable molecules are chosen from the vinyl monomers of

formula B-R-A, in which R is a group bearing a vinyl double bond, A is an electron-withdrawing or electron-donating functional group, and B is any functional group, for example a group bearing a function that it is desired to give to the final polymer obtained from said monomers; the molecules comprising at least one strained ring; the functionalized monomers derived from said monomers and molecules; and mixtures of said monomers and molecules.

**8.** The process according to claim 7, in which said monomer is a monomer whose polymer is electrograftable by cathodic polymerization, chosen from acrylonitrile, methacrylonitrile, para-chlorostyrene, 4-vinylpyridine, alkyl methacrylates such as methyl methacrylate, ethyl methacrylate and butyl methacrylate, and cyano acrylates.

**9.** The process according to claim 7, in which said monomer is a monomer that may be initiated by anodic polarization, chosen from 4-vinylpyridine and N-vinylpyrrolidone.

**10.** The process according to claim 7, in which said molecule comprising at least one strained ring is a molecule which may be opened by nucleophilic or electrophilic attack, preferably chosen from molecules containing an epoxy group and oxiranes.

**11.** The process according to claim 1, in which said grafted organic molecules constitute an insulating grafted organic film.

**12.** The process according to claim 1, in which said organic molecules have, prior to their grafting, particular properties, for example chemical or physical properties such as polarity, or optical or magnetic properties, and form a localized deposit having said properties.

**13.** The process according to claim 1, in which the locally grafted organic film formed by the organic molecules is subsequently functionalized or modified to give it particular properties, for example chemical, physical, optical or magnetic properties, that it did not have at the start.

**14.** The process according to claim 13, in which the organic film is a film of electrografted polyacrylonitrile which is subsequently cured to make it electrically conductive and a good candidate for lubrication.

**15.** The process according to claim 13, in which the locally grafted organic film is doped, for example, with silver salts which may then be revealed with a photographic developer.

**16.** The process according to any one of claims 1 to 15, in which the composite surface is chosen from the surfaces of microelectronic circuits, such as biochips, microsensors and "lab-on-chips", and the surfaces of microfluidics devices, of micromechanical components and of fine jewelry components.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3271180 A
- EP 0774662 A1
- WO 9629629 A
- EP 0449226 A
- FR 2480314 A
- WO 9844172 A
- WO 9840450 A
- WO 9924868 A
- WO 9858745 A
- FR 2787581 A
- FR 2787582 A
- WO 9938612 A


### Littérature non-brevet citée dans la description


- **VIEL et al.** *Journal of Electroanalytical Chemistry,* 1999, vol. 470, 14-22
- **CHOI, K. H. et al.** Controlled deposition of carbon nanotubes on a patterned substrate. *Surface Science,* 2000, vol. 462 (1-3), 195-202
- **G. DENIAU ; G. LECAYON ; P. VIEL ; G. HENNICO ; J. DELHALLE.** *Langmuir,* 1992, vol. 8, 267
- **E. LEONARD-STIBBE ; G. LECAYON ; G. DENIAU ; P. VIEL ; M. DEFRANCESCHI ; G. LEGEAY ; J. DELHALLE.** *Journal of Polymer Science A,* 1994, vol. 32, 1551
- **C. BUREAU ; G. DENIAU ; P. VIEL ; G. LECAYON ; J. DELHALLE.** *Journal of Adhésion,* 1998, vol. 58, 101
- **C. BUREAU ; G. LECAYON.** *Journal of Chemical Physics,* vol. 106 (1997), 8-821
- **C. BUREAU ; J. DELHALLE.** *Journal of Surface Analysis,* 1999, vol. 6, 159
- **G. DENIAU ; P. VIEL ; G. LECAYON.** *Surface and Interface Analysis,* 1992, vol. 18, 443
- **P. JONNARD ; F. VERGAND ; P. F. STAUB ; C. BONNELLE ; G. DENIAU ; C. BUREAU ; G. LECAYON.** *Surface and Interface Analysis,* 1996, vol. 24, 339
- **G. TOURILLON ; R. GARRETT ; N. LAZARZ ; M. RAYNAUD ; C. REYNAUD ; G. LECAYON ; P. VIEL.** *Journal of the Electrochemical Society,* 1990, vol. 137, 2-499
- **P. VIEL ; C. BUREAU ; G. LECAYON.** *Journal of Electroanalytical Chemistry,* 1999, vol. 470, 14
- **C. BUREAU.** Thèse de Doctorat. Université Paris VI, 1994
- **G. DENIAU ; G. LECAYON ; P. VIEL ; G. ZALCZER ; C. BOIZIAU ; G. HENNICO ; J. DELHALLE.** *Journal of the Chemical Society, Perkin Transactions,* 1990, vol. 2, 1-433
- **C. LEBRUN ; G. DENIAU ; P. VIEL ; G. LECAYON.** *Surface Coatings Technology,* 1998, vol. 100 - 101, 474
- **C. BUREAU ; G. DENIAU ; P. VIEL ; G. LECAYON.** *Macromolecules,* 1997, vol. 30, 333
- **C. BUREAU.** *Journal of Electroanalytical Chemistry,* 1999, vol. 479, 43
- **C. C. YEN.** *Journal of Applied Polymer Science,* 1996, vol. 60, 605